# EUROPÄISCHE PATENTANMELDUNG

(11) **EP 3 992 664 A1**
(43) Veröffentlichungstag der Anmeldung: **04.05.2022**
(21) Anmeldenummer: 20205084.5
(22) Anmeldetag: 02.11.2020
(51) Int. Cl.: G01S 7/497

(54) **OPTOELEKTRONISCHER SENSOR UND VERFAHREN ZUM ERFASSEN VON INFORMATIONEN AUS EINEM ERFASSUNGSBEREICH**

(71) Anmelder: SICK AG, 79183 Waldkirch (DE)
(72) Erfinder: Hammes, Markus, 79117 Freiburg (DE); Sigmund, Jörg, 79341 Kenzingen (DE); Geisemeyer, Ino, 79102 Freiburg (DE); Stein, Patrick, 79189 Bad Krozingen (DE)

(57) **Zusammenfassung**

Es wird ein optoelektronischer Sensor (10) angegeben, der einen Lichtsender (12) zum Aussenden von Sendelicht (16) in einen Erfassungsbereich (18), einen ersten Lichtempfänger (26) zum Erzeugen eines Empfangssignals aus Empfangslicht (22) aus dem Erfassungsbereich (18), eine Frontscheibe (34) mit einem Durchtrittsbereich (36) für das Sendelicht (16) sowie eine Steuer- und Auswertungseinheit (28) aufweist, die dafür ausgebildet ist, das Empfangssignal auszuwerten und eine beeinträchtigte Lichtdurchlässigkeit der Frontscheibe (34) zu erkennen. Dabei weist die Frontscheibe (34) einen Auskopplungsbereich (42) auf, an der ein Frontscheibenüberwachungslichtbündel (44) aus der Frontscheibe (34) in den Sensor zurückkehrt, die Steuer- und Auswertungseinheit (28) bewertet die Lichtdurchlässigkeit anhand des Frontscheibenüberwachungslichtbündels (44) bewertet, und das Frontscheibenüberwachungslichtbündel (44) ist ein Anteil des Sendelichts (16), der bei Austritt des Sendelichts (16) aus der Frontscheibe (34) zurückgestreut und dann in der Frontscheibe (34) ein- oder mehrfach totalreflektiert wird.

## Beschreibung

Die Erfindung betrifft einen optoelektronischen Sensor und ein Verfahren zum Erfassen von Informationen aus einem Erfassungsbereich nach dem Oberbegriff von Anspruch 1 beziehungsweise 15.

Optoelektronische Sensoren gibt es in einer großen Vielfalt für die verschiedensten Anwendungsgebiete. Speziell hervorzuheben sind entfernungsmessende Sensoren, darunter Laserscanner und bestimmte 3D-Kameras, die mit einem Lichtlaufzeitverfahren die Entfernung (TOF, Time of Flight oder Lidar, Light Detection and Ranging) messen und somit Objektpositionen bestimmen. Für 3D-Kameras sind noch weitere Verfahren zur Ermittlung der Entfernungs- oder Tiefeninformation wie die Stereoskopie bekannt.

Verlässlichkeit und Robustheit sind wichtige Eigenschaften dieser entfernungsmessenden und auch anderer optoelektronischer Sensoren. Das gilt für alle Anwendungen, etwa wenn es in der Automatisierungstechnik zu minderwertigen Ergebnissen oder stillstehenden Fahrzeugen kommt. Speziell in der Sicherheitstechnik ist eine verlässliche Funktion unverzichtbar. Dort sollen Objekte und insbesondere Personen rechtzeitig erfasst werden, um Unfälle zu vermeiden. Das betrifft unter anderem Fahrzeuge jeder Art einschließlich führerlosen Fahrzeugen wie AGVs (Automated Guided Vehicle), AGCs (Automated Guided Cart), AMRs (Autonomous Mobile Robot) oder Flurförderzeuge, die auf öffentlichen Straßen oder in abgeschlossener Umgebung speziell im Bereich der Fabrik- und Logistikautomatik verkehren. Ein anderes Beispiel ist die Absicherung einer Maschine, etwa eines Roboters in einer Roboterzelle, wo der optoelektronische Sensor Schutzfelder auf Objekteingriffe überwacht oder das Unterschreiten von Mindestabständen erkennt. Es erfolgt dann jeweils eine sicherheitsgerichtete Reaktion, die in einem Ausweichen, Verlangsamen oder vollständigen Abbremsen bestehen kann.

In der Sicherheitstechnik eingesetzte Sensoren müssen ihre Verlässlichkeit durch das Erfüllen von Sicherheitsnormen nachweisen, beispielsweise der Norm EN 13849 für Maschinensicherheit oder der Gerätenormen IEC61496 oder EN61496 für berührungslos wirkende Schutzeinrichtungen (BWS). Die Aufzählung der Normen ist keineswegs abschließend, die jeweilige Relevanz kann von der konkreten Anwendung, der Region und dem Zeitraum abhängen. Speziell im Bereich Robotik und des autonomen Fahrens gibt es weitere Normen. Zur Erfüllung solcher Sicherheitsnormen sind eine Reihe von Maßnahmen zu treffen, wie sichere elektronische Auswertung durch besondere Verfahren sowie redundante, diversitäre Elektronik oder Funktionsüberwachung.

Eine besondere Herausforderung für optoelektronische Sensoren ist die mögliche Verschmutzung optischer Bauteile durch Staubteilchen, Wassertropfen, Fingerabdrücke und gerade im industriellen Umfeld auch hartnäckigerer Verschmutzungen durch Öl und Partikel aus diversen Bearbeitungsprozessen. Davon betroffen ist regelmäßig in erster Linie eine Frontscheibe, die das Innere des Sensors schützt. Durch die Verunreinigungen wird die Lichtdurchlässigkeit oder Transmissionsfähigkeit verringert, und es entsteht Streulicht. Dadurch wird eine aktive Beleuchtung der Szenerie verdunkelt und der Pegel des empfangenen Lichts reduziert, so dass ab einem bestimmten Punkt der Verschmutzung die Funktion des Sensors nicht mehr gewährleistet werden kann.

Nicht-sichere Sensoren, also solche wie Standardkameras, die außerhalb der Sicherheitstechnik eingesetzt sind, verzichten typischerweise auf besondere Gegenmaßnahmen, die Messergebnisse verschlechtern sich einfach, bis manuell beispielsweise im Rahmen einer Wartung eingegriffen wird. Für sichere Sensoren, die in sicherheitstechnischer Anwendung Unfälle vermeiden sollen, ist dagegen eine Frontscheibenüberwachung vorzusehen, die einen möglichen Funktionsausfall rechtzeitig erkennt.

Bei Laserscannern besteht die verbreitetste herkömmliche Lösung für eine Frontscheibenüberwachung, wie aus der DE 43 45 446 C2 bekannt, in der Verteilung einer Vielzahl von Sender-Empfängerpärchen über den gesamten Winkelbereich der Frontscheibe, mit denen die Frontscheibe testweise durchstrahlt wird. Das bedeutet einen hohen Aufwand für die zahlreichen Bauteile, und die Form der Frontscheibe ist speziell angepasst, um die Frontscheibenüberwachung zu unterstützen. Es gibt verschiedene Varianten, in denen die Frontscheibe in Transmission oder Reflexion, mit ein- oder mehrfacher Umlenkung des Testlichts sowie mit stationären oder mitdrehenden optischen Elementen für die Teststrahlen geprüft wird. Die EP 2 479 586 A1 beispielsweise wertet einen Frontscheibenreflex des messenden Scanstrahls aus, um einen Frontscheibenverunreinigungswert zu gewinnen. Die DE 19 706 612 A1 verwendet ein zusätzliches Testmesssystem, das über die Rückseite des Drehspiegels für das eigentliche Messsystem geführt ist.

Für berührungsempfindliche Anzeigen ist beispielsweise aus US 4 346 376 A oder US 8 441 467 B2 bekannt, Licht durch innere Totalreflexion sozusagen in einer Scheibe gefangen zu halten. Durch Berührung mit dem Finger wird die Bedingung der Totalreflexion aufgehoben, so dass der Finger anhand des Lichtaustritts lokalisiert werden kann. Mit einer Überwachung einer Frontscheibe eines Sensors auf Transmissionsfähigkeit hat das aber nichts zu tun.

In der DE 10 2007 003 023 B4 wird der Ansatz mit interner Totalreflexion für einen Lichtdurchlässigkeitstest einer Kamera verwendet. Von der Kante her wird Testlicht in die Frontscheibe eingekoppelt. Falls es durch Verunreinigungen Störstellen auf der Frontscheibe gibt, tritt dort Licht aus und wird von dem Bildsensor der Kamera erkannt. Der zusätzliche Testlichtsender erhöht aber den Herstellungsaufwand, und bei noch hinnehmbarer Verschmutzung stört das austretende künstliche Testlicht den Bildsensor unnötig.

Es ist daher Aufgabe der Erfindung, eine verbesserte Frontscheibenüberwachung für einen optoelektronischen Sensor anzugeben.

Diese Aufgabe wird durch einen optoelektronischen Sensor und ein Verfahren zum Erfassen von Informationen aus einem Erfassungsbereich nach Anspruch 1 beziehungsweise 15 gelöst. Ein Lichtsender sendet Sendelicht in den Erfassungsbereich, um diesen auszuleuchten, wobei das Sendelicht im Falle einer Lichtlaufzeitmessung geeignet mit Pulsen oder einem periodischen Signal moduliert ist. Ein Lichtempfänger erzeugt ein Empfangssignal aus Empfangslicht, dass aus dem Erfassungsbereich empfangen wird und eine Überlagerung aus zurückkehrenden Sendelicht und Umgebungslicht ist. Der Sensor umfasst ferner eine Frontscheibe mit einem Durchtrittsbereich für das Sendelicht, wobei die Frontscheibe vorzugsweise Teil eines schützenden Gehäuses des Sensors ist. Die Frontscheibe kann auch einen weiteren oder überlappenden Durchtrittsbereich für das Empfangslicht aufweisen, oder dafür ist alternativ eine separate Frontscheibe vorgesehen. Eine Steuer- und Auswertungseinheit wertet das Empfangssignal aus. Das kann beispielsweise den Pegel des Empfangssignals betreffen, einen Hell-Dunkelverlauf über die Zeit oder ein in Pixeln aufgelöstes Bild eines Bildsensors als Lichtempfänger. Vorzugsweise sollen durch die Auswertung Objekte erfasst und Informationen über die Objekte gewonnen werden, insbesondere ein Abstand gemessen werden. Die Steuer- und Auswertungseinheit erkennt außerdem in einer Frontscheibenüberwachung beziehungsweise einem Transmissionstest eine beeinträchtigte Lichtdurchlässigkeit der Frontscheibe.

Die Erfindung geht von dem Grundgedanken aus, von der Frontscheibe rückgestreutes Sendelicht für die Frontscheibenüberwachung zu verwenden, das zuvor in der Frontscheibe durch Totalreflexion (TIR, total internal reflection) umgelenkt wurde. Die Frontscheibe weist einen Auskopplungsbereich auf, an dem ein Frontscheibenüberwachungslichtbündel in den Sensor zurückkehrt, und die Lichtdurchlässigkeit wird mit diesem Frontscheibenüberwachungslichtbündel bewertet. Somit entsteht das Frontscheibenüberwachungslichtbündel in mehreren Schritten aus dem Sendelicht. Bei Austritt aus der Frontscheibe in den Erfassungsbereich wird ein Teil des Sendelichts gestreut, der sich mit zunehmender Verunreinigung der Frontscheibe erhöht. Von dem Streulicht wiederum hat einen Teil einen hinreichend flachen Winkel zu der Frontscheibe, so dass es an den beiden inneren Grenzflächen der Frontscheibe zum Inneren des Sensors beziehungsweise zum Erfassungsbereich hin totalreflektiert wird. Der Auskopplungsbereich verletzt gezielt die Bedingung der Totalreflexion, so dass dort ein Teil des in der Frontscheibe totalreflektierten Lichts als Frontscheibenüberwachungslichtbündel austritt.

Die Erfindung hat den Vorteil, dass eine besonders kostengünstige und verlässliche Frontscheibenüberwachung möglich wird. Es ist keine zusätzliche Lichtquelle als Testlichtsender erforderlich, da ein Teil des Sendelichts selbst verwendet wird. Es wird auch tatsächlich der Durchtrittsbereich und damit der relevante Teil der Frontscheibe getestet. Die Frontscheibenüberwachung ist äußerst robust gegenüber Fremdlicht und (Retro-)Reflektoren im Erfassungsbereich. Wegen der Totalreflexion werden nur Objekte und Verunreinigungen direkt an der Frontscheibe erfasst, Objekte schon in kürzestem Abstand zu der Frontscheibe tragen nicht mehr zu dem Frontscheibenüberwachungslichtbündel bei. Die Frontscheibenüberwachung kann zusätzlich die Funktion des Lichtsenders überwachen oder dabei unterstützen und erkennt beispielsweise auch, wenn die Frontscheibe entfernt wird.

Der Sensor weist bevorzugt einen zweiten Lichtempfänger zum Empfangen des Frontscheibenüberwachungslichtbündels auf. Der zweite Lichtempfänger ist vorzugsweise an dem Auskopplungsbereich und jedenfalls im Strahlweg des Frontscheibenüberwachungslichtbündels angeordnet. Der Auskopplungsbereich hat eine zweifache Aufgabe. Zum einen soll für das an Verunreinigungen gestreute Sendelicht, das in der Frontscheibe totalreflektiert wird, die Bedingung der Totalreflexion verletzt werden, damit das Frontscheibenüberwachungslichtbündel austreten kann. Zum zweiten soll aber auch ein Frontscheibenreflex, also ein Anteil gerichteter Reflexion des Sendelichts beziehungsweise nicht totalreflektiertes Streulicht, von dem zweiten Lichtempfänger weggelenkt werden. Somit kann mit dem Frontscheibenüberwachungslichtbündel ganz gezielt ein Grad der Verunreinigung gemessen werden.

Der erste Lichtempfänger fungiert bevorzugt zugleich als zweiter Lichtempfänger, wobei insbesondere mindestens ein Lichtumlenkelement zwischen Auskopplungsstelle und erstem Lichtempfänger angeordnet ist. In dieser Ausführungsform wird das Frontscheibenüberwachungslichtbündel ein- oder mehrfach umgelenkt, um auf den ersten Lichtempfänger zu fallen. Dort ist besonders bevorzugt ein separater Bereich vorgesehen, der als zweiter Lichtempfänger genutzt wird, beispielsweise eine Gruppe von Pixeln. Für die Lichtumlenkung können Spiegel, Prismen, Lichtleiter und ähnliche optische Elemente eingesetzt werden. In anderen Ausführungsformen gibt es diese Doppelfunktion des ersten Lichtempfängers nicht, dort ist der zweite Lichtempfänger ein eigenes Bauteil, beispielsweise eine Fotodiode.

Der Lichtsender beziehungsweise dessen Sendeoptik weist bevorzugt einen breiten Abstrahlwinkel in zumindest einer Querschnittsrichtung auf. Dieser Abstrahlwinkel beträgt besonders bevorzugt mindestens 30°, 50°,60°, 70°, 80° oder 90° in horizontaler und/oder vertikaler Richtung. Es handelt sich somit um eine Linien- oder Flächenbeleuchtung mit einem großen Beleuchtungsbereich und somit nutzbaren Erfassungsbereich. Außerdem sorgt der breite Abstrahlwinkel dafür, dass Teile des Sendelichts bereits mit recht flachem Winkel auf die Frontscheibe treffen, so dass schon bei einer Streuung an Verunreinigungen in vergleichsweise zentrale Richtungen die für eine innere Totalreflexion in der Frontscheibe erforderlichen Winkel erreicht werden.

Die Frontscheibe ist bevorzugt als Fläche ausgebildet. Es handelt sich demnach um ein gewöhnliches Fenster ohne Krümmung. Bei einer herkömmlichen Frontscheibenüberwachung wäre eine Krümmung sehr üblich, denn zumeist betrifft dies Laserscanner mit rotationssymmetrischen Frontscheiben, die etwa die Form eines Zylinders oder Kegelstumpf haben.

Der Auskopplungsbereich weist bevorzugt einen Versatz gegenüber dem Durchtrittsbereich auf. Damit bleibt der Durchtrittsbereich selbst unbeeinträchtigt. Wegen der inneren Totalreflexion in der Frontscheibe kann der Auskopplungsbereich zunächst im Wesentlichen beliebig an der Frontscheibe angeordnet werden, und diese Freiheit wird hier genutzt, um Wechselwirkungen mit der eigentlichen Messung zu vermeiden. Allerdings gibt es wegen der flächigen Lichtausbreitung einen Energieverlust, und deshalb sollte der Auskopplungsbereich vorzugsweise nahe an dem Durchtrittsbereich bleiben.

Der Auskopplungsbereich ist bevorzugt als Kerbe oder Ausstülpung auf einer Innenseite der Frontscheibe ausgebildet. Damit kann der Auskopplungsbereich ohne Zusatzkosten mit der Frontscheibe hergestellt werden und nimmt auch keinen Bauchraum im Sensorinneren ein. Die Kerbe oder Aussparung erzeugt vorzugsweise mindestens eine Fläche, die schräg in die Frontscheibe hineinsteht. Der veränderte Winkel dieser Fläche gegenüber der Ebene der Frontscheibe verletzt in gewünschter Weise die Bedingungen der Totalreflexion. Eine Kerbe an der Innenseite bewirkt eine Auskopplung des Frontscheibenüberwachungslichtbündels in Richtung auf den zweiten Lichtempfänger und lässt die Außenseite des Sensors unberührt. Prinzipiell könnte man auch nach außen auskoppeln, aber dann wäre der zweite Lichtempfänger allenfalls mit einer sehr komplexen Gehäuseform geschützt. Eine Ausstülpung ist in gewisser Weise eine inverse Aussparung oder Kerbe und kann die Funktion als Auskopplungsbereich ebenfalls erfüllen.

Der Auskopplungsbereich weist bevorzugt die Geometrie eines Zylinderabschnitts. Die Kerbe oder Aussparung hat demnach speziell die Form eines Teils eines Zylinders. Ein Zylinder kann zunächst in seiner allgemeinen Definition mit beliebiger Grundfläche verstanden werden, vorzugsweise ist aber ein Kreiszylinder gemeint. Dessen Mantelfläche hat gewünschte lichtbündelnde Eigenschaften ähnlich einer Zylinderlinse. Alternativ ist eine parabolische Geometrie vorstellbar. All das gilt für eine Kerbe wie für eine Ausstülpung.

Der Zylinderabschnitt umfasst bevorzugt einen Teil des Zylindermantels und einen Teil einer Zylindergrundfläche. Die Kerbe oder Aussparung wird dementsprechend von einem Zylinderstück mit einem Teil des Zylinderdeckels und einem angrenzenden Mantelabschnitt gebildet. Man kann sich diese Geometrie so vorstellen, dass der Auskopplungsbereich von einem Zylinder abgeformt wird, der teilweise in die Frontscheibe hineingedrückt wird, die zu diesem Zeitpunkt bildlich oder tatsächlich noch aus weichem Material besteht. Wiederum gilt ein entsprechendes Bild für den Fall einer Ausstülpung.

Die Symmetrieachse der zylindrischen Geometrie des Auskopplungsbereichs ist bevorzugt gegenüber einem Lot von dem Lichtsender auf die Frontscheibe verkippt. Die Grundfläche oder Deckfläche bildet dann eine schräg in die Frontscheibe hineinstehende Fläche, vorzugsweise nur mit einem Kreisabschnitt über weniger als 180°, und daran schließt sich der ebenfalls schräg zur Frontscheibe orientierte Mantelabschnitts an. In der Vorstellung, dass der Auskopplungsbereich von einem Zylinder abgeformt wird, steht dieser Zylinder nun schräg und wird mit der Kante des Zylinderdeckels ein Stück in die Frontscheibe gedrückt. Zusätzlich besteht bevorzugt ein Versatz zu dem genannten Lot.

Der Auskopplungsbereich zieht sich bevorzugt von der Innenseite der Frontscheibe her bis mindestens in die Hälfte der Dicke der Frontscheibe. Dadurch ist sichergestellt, dass genügend Licht für das Frontscheibenüberwachungslichtbündel ausgekoppelt wird. Zugleich verbleibt genug von der Dicke der Frontscheibe für deren strukturelle Integrität.

Die Frontscheibe weist bevorzugt ein lichtstreuendes Element auf. Dabei kann es sich um eine Beschichtung, ein Gitter oder ein sonstiges teiltransparentes Element handeln. Auf diese Weise wird stets, auch bei sauberer Frontscheibe, ein Frontscheibenüberwachungslichtbündel erzeugt und zumindest etwas Licht auf den zweiten Lichtempfänger gelenkt. Dies dient als Ersatz oder Unterstützung einer Überwachung des Lichtsenders, mit der beispielsweise ein Degradieren einer Laser- oder LED-Lichtquelle erkannt wird. Alternativ genügt die unvermeidliche Streuung an der äußeren Grenzfläche der Frontscheibe, wobei dann vorzugsweise zumindest lokal auf eine Antireflex-Beschichtung verzichtet werden sollte.

Das lichtstreuende Element überdeckt bevorzugt den Durchtrittsbereich nur teilweise. Das reduziert den Einfluss des lichtstreuenden Elements auf die eigentliche Erfassung. Insbesondere kann der Öffnungswinkel des Lichtsenders etwas größer sein als der Sichtbereich des ersten Lichtempfängers und das lichtstreuende Element am überstehenden Rand des Durchtrittsbereichs außerhalb des Sichtbereichs angebracht werden.

Dadurch wird stets ein Frontscheibenüberwachungslichtbündel erzeugt, die Erfassung mit dem ersten Lichtempfänger aber nicht beeinträchtigt.

Der Sensor ist bevorzugt als Sicherheitssensor für den sicherheitstechnischen Einsatz zur Unfallvermeidung ausgebildet, wobei die Steuer- und Auswertungseinheit dafür ausgebildet ist, bei Erkennen eines Gefahrereignisses ein Signal zum Einleiten einer sicherheitsgerichteten Reaktion auszugeben, wobei das Gefahrereignis ein in einer gefährlichen Situation erfasstes Objekt oder eine über eine Toleranz hinausgehende Beeinträchtigung der Lichtdurchlässigkeit der Frontscheibe ist. Eine gefährliche Situation wird beispielsweise durch Überwachung von konfigurierten Schutzfeldern im Erfassungsbereich oder durch Bestimmung eines kürzesten Abstandes zwischen erfassten Objekten und einer Gefahrenquelle erkannt (Speed-and-Separation-Monitoring). Wenn die Frontscheibenüberwachung eine unzureichende Lichtdurchlässigkeit feststellt, kann die Sicherheitsfunktion des Sensors nicht mehr gewährleistet werden, und weil dann gefährliche Situationen übersehen werden könnten, muss vorsorglich ebenfalls eine sicherheitsgerichtete Reaktion erfolgen. Die sicherheitsgerichteten Reaktion kann ein Nothalt eines Fahrzeugs oder einer Maschine sein, vorzugsweise wird wann immer möglich zunächst eine Bewegung verlangsamt oder eine Ausweichbewegung veranlasst, mit der die gefährliche Situation ausgeräumt wird. Ein sicherer Sensor oder Sicherheitssensor erfüllt eine einschlägige Sicherheitsnorm zur Maschinensicherheit oder für berührungslos wirkende Schutzeinrichtungen, von denen einleitend einige genannt sind. Die konkreten Sicherheitsnormen können sich über die Zeit und die Anwendungen verändern, die grundlegenden technischen Prinzipien wie Redundanz, Diversität und Selbsttests jedoch nicht. Obwohl es bislang nicht üblich ist, kann auch ein nicht sicherer optoelektronischer Sensor von der erfindungsgemäßen Frontscheibenüberwachung profitieren und beispielsweise rechtzeitig eine Wartungsanforderung ausgeben (predictive maintenance).

Der Sensor ist bevorzugt als Kamera mit einem Bildsensor als Lichtempfänger ausgebildet. Kameras werden vielfältig eingesetzt, und es besteht auch ein Bedarf an Sicherheitskameras zum Einsatz in sicherheitstechnischen Anwendungen. Die erfindungsgemäße Frontscheibenüberwachung ist ein Beitrag, um mit einer Kamera die einschlägigen Sicherheitsnormen erfüllen zu können.

Der Sensor ist noch bevorzugter als 3D-Lichtlaufzeitkamera zur Erfassung dreidimensionaler Bilddaten aus dem Erfassungsbereich ausgebildet, wobei die Steuer- und Auswertungseinheit dafür ausgebildet ist, das Sendelicht mit mindestens einer Modulationsfrequenz zu modulieren, das jeweilige Empfangssignal von Lichtempfangspixeln des Bildsensors mit der Modulationsfrequenz zu demodulieren und anhand eines Phasenversatzes einen jeweiligen Abstandswert zu bestimmen. Es sei vorsichtshalber gesagt, dass die Modulation des Sendelichts eine künstliche Amplitudenmodulation mit einer gewählten Modulationsfrequenz ist, die nicht mit der Trägerfrequenz der eigentlichen Lichtwelle verwechselt werden sollte. Das Empfangslicht mit dem zurückkehrenden Sendelicht wird in einem Lock-In-Verfahren mit einem Signal der Modulationsfrequenz demoduliert. Dabei sind entsprechende Schaltkreise für die Demodulation vorzugsweise bereits in den Pixeln des Lichtempfängers oder Bildsensors implementiert, die dann auch als ToF-Pixel (ToF, Time of Flight, Lichtlaufzeit) oder Lock-in-Pixel bezeichnet werden. Mit dem demolierten Signal kann in üblicher Weise ein Phasenversatz und daraus eine Lichtlaufzeit bestimmt werden. Es ist denkbar, mit mehreren Modulationsfrequenzen zu arbeiten, um den Eindeutigkeitsbereich und damit die Reichweite zu vergrößern.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors mit Frontscheibenüberwachung;
- Fig. 2: eine Schnittdarstellung des Strahlenverlaufs zwischen Lichtsender und einem Lichtempfänger für die Frontscheibenüberwachung;
- Fig. 3: eine dreidimensionale Detailansicht eines Auskopplungsbereichs einer Frontscheibe;
- Fig. 4: eine dreidimensionale Darstellung des Strahlenverlaufs zwischen Lichtsender, Frontscheibe, Auskopplungsbereich und Lichtempfänger für die Frontscheibenüberwachung; und
- Fig. 5: eine der Figur 4 entsprechende Draufsicht.

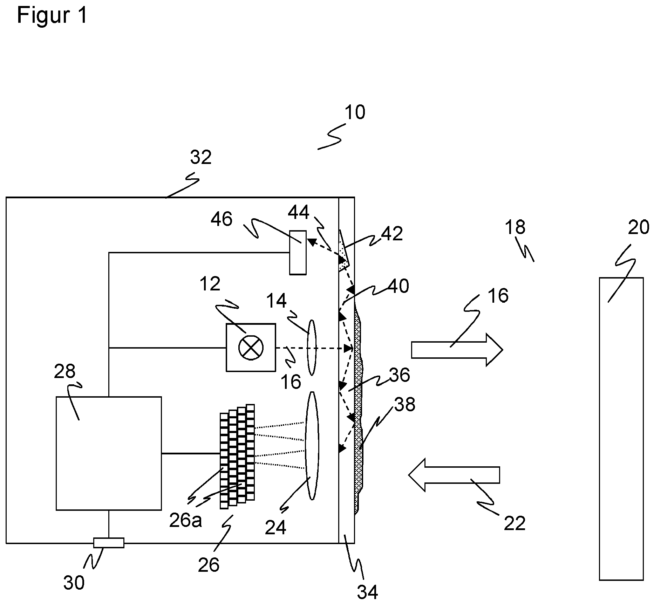

Figur 1 zeigt eine schematische Blockdarstellung eines optoelektronischen Sensors 10. Dargestellt und beschrieben wird rein beispielhaft eine 3D-Lichtlaufzeitkamera nach dem Phasenprinzip. Die Erfindung befasst sich mit einer Frontscheibenüberwachung, wie sie später näher erläutert wird. Das ist auch für andere optoelektronische Sensoren als 10 mit aktiver Beleuchtung anwendbar, insbesondere für jegliche 2D- und 3D-Kameras und LiDAR-Sensoren.

Ein Lichtsender 12 sendet durch eine Sendeoptik 14 moduliertes Sendelicht 16 in einen Erfassungsbereich 18 aus. Als Lichtquelle kommen LEDs oder Laser in Form von Kantenemittern oder VCSEL in Betracht. Der Lichtsender 12 ist derart ansteuerbar, dass die Amplitude des Sendelichts 16 mit einer Frequenz typischerweise im Bereich von 1 MHz bis 1000 MHz moduliert wird. Die Modulation ist beispielsweise sinus- oder rechteckförmig, jedenfalls eine periodische Modulation. Zur Reduktion der gegenseitigen Beeinflussung mehrerer 3D-Lichtlaufzeitkameras kann auch ein künstlicher Jitter beziehungsweise eine Art Codierung (Spread Spectrum) verwendet werden. Durch die Frequenz entsteht ein begrenzter Eindeutigkeitsbereich der Abstandsmessung, so dass für große Reichweiten des optoelektronischen Sensors 10 kleine Modulationsfrequenzen erforderlich sind. Alternativ werden Messungen bei zwei oder mehr Modulationsfrequenzen durchgeführt, um in Kombination der Messungen den Eindeutigkeitsbereich zu vergrößern. Die Modulation ist nur erforderlich, wenn in einem Phasenverfahren eine Lichtlaufzeit gemessen werden soll, in anderen optoelektronischen Sensoren 10 genügt beispielsweise auch eine gleichmäßige oder mit der jeweiligen Aufnahme synchronisierte gepulste Beleuchtung.

Trifft das Sendelicht 16 in dem Erfassungsbereich 18 auf ein Objekt 20, so wird ein Teil als Empfangslicht 22 zu dem optoelektronischen Sensor 10 zurückgeworfen und dort durch eine Empfangsoptik 24, beispielsweise eine Einzellinse oder ein Empfangsobjektiv, auf einen Lichtempfänger 26 geführt. Der Lichtempfänger 26 ist im Falle einer Kamera als Bildsensor ausgebildet und weist eine Vielzahl von beispielsweise zu einer Matrix oder Zeile angeordneten Lichtempfangselementen oder Empfangspixeln 26a auf. Die Auflösung eines Bildsensors kann von zwei oder einigen bis hin zu tausenden oder Millionen Empfangspixeln 26a reichen. Alternativ ist aber auch eine Zeile von Pixelelementen oder in anderen optoelektronischen Sensoren 10 eine PSD (Position Sensing Device) oder eine einfache Photodiode denkbar.

Eine Steuer- und Auswertungseinheit 28 bestimmt mit Hilfe der Empfangspixel 26a und durch mehrere Messungen mit Sendelicht 16 unterschiedlicher Phase einen Phasenversatz zwischen Sendelicht 16 und Empfangslicht 22 und daraus eine Lichtlaufzeit, die in einen Abstandswert je Empfangspixel 26a umgerechnet werden kann. Es entsteht ein dreidimensionales Bild, Abstandsbild oder Tiefenbild, das an einer Schnittstelle 30 ausgegeben werden kann. Ein Teil der Funktionalität der Steuer- und Auswertungseinheit 28 insbesondere zum Demodulieren kann alternativ bereits in die Empfangspixel 26a integriert sein. Die Schnittstelle 30 oder alternativ eine oder mehrere weitere, nicht gezeigte Anschlüsse dienen umgekehrt der Eingabe von Steuersignalen oder Parametrierungen des optoelektronischen Sensors 10.

Die beschriebenen Komponenten des optoelektronischen Sensors 10 werden durch ein Gehäuse 32 geschützt, das zum Erfassungsbereich 18 hin eine transparente Schutzscheibe oder Frontscheibe 34 aufweist. Die Frontscheibe 34 besteht aus einem Material wie Glas oder Kunststoff, das optisch dichter als Luft ist und ist bevorzugt planparallel. Abweichend von der Darstellung in Figur 1 kann die Frontscheibe 34 auch nur einen Teil der in Richtung des Erfassungsbereichs 18 liegenden Gehäusewand des Gehäuses 32 bilden.

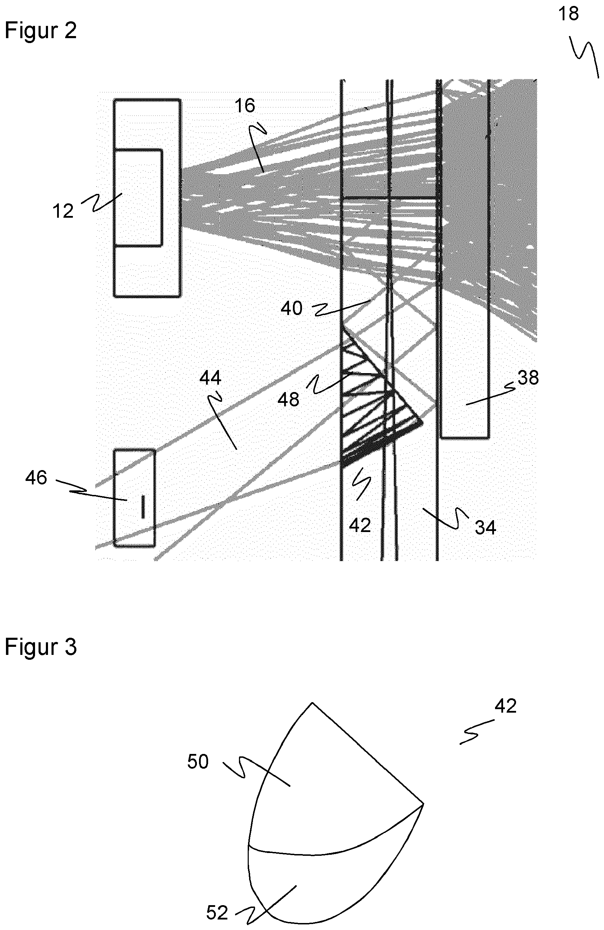

Der optoelektronische Sensor 10 erkennt für eine verlässlichere Messung selbst, wenn die Frontscheibe 34 verunreinigt ist. Diese Frontscheibenüberwachung wird nun grob und später unter Bezugnahme auf die Figuren 2 bis 5 im Detail beschrieben. Eine verunreinigte Frontscheibe 34 kann einfach an der Schnittstelle 30 gemeldet werden, etwa in Form einer Wartungsanforderung. Vorzugsweise ist jedoch der optoelektronische Sensor 10 ein Sicherheitssensor und damit sicher im einleitend beschriebenen Sinne beziehungsweise für den Einsatz in der Sicherheitstechnik zur Unfallvermeidung zugelassen. Bei einem sicheren optoelektronischen Sensor 10 wird eine sicherheitsgerichtete Reaktion ausgelöst, wenn wegen Verunreinigung der Frontscheibe 34 ein Funktionsverlust droht. Dazu ist dann beispielsweise die Schnittstelle 30 ein sicherer und insbesondere zweikanaliger Ausgang (OSSD, Output Signal Switching Device).

Wenn sich in einem Durchtrittsbereich 36 der Frontscheibe 34 für das Sendelicht 16 eine hier sehr übertrieben dargestellte Verunreinigung 38 bildet, so wird ein Teil des Sendelichts 16 daran gestreut, und das Streulicht breitet sich in alle Richtungen aus. Ein Teil 40 dieses Streulichts hat bezüglich der Ebene der Frontscheibe 34 einen ausreichend flachen Winkel, um innerhalb der Frontscheibe 34 totalreflektiert zu werden. Dies wird durch einen großen Abstrahlwinkel des Lichtsenders 12 unterstützt, da dann bereits ein Teil des Sendelichts 16 flacher auf die Frontscheibe 34 fällt.

An einem gezielt in der Frontscheibe 34 angebrachten Auskopplungsbereich 42 werden die Bedingungen der Totalreflexion aufgehoben, und ein Frontscheibenüberwachungslichtbündel 44 tritt nach innen aus. Ein zweiter Lichtempfänger 46 erzeugt aus dem Frontscheibenüberwachungslichtbündel 44 ein entsprechendes Signal und gibt das für die Frontscheibenüberwachung an die Steuer- und Auswertungseinheit 28 weiter.

Die Darstellungen in Figur 1 sind rein schematisch. Gerade der Überlapp von Sendelicht 16 und Empfangslicht 22 kann bei realen Maßstäben bereits in sehr kurzem Abstand zum optoelektronischen Sensor 10 nahezu vollständig sein. Dadurch gibt es auch in Wirklichkeit einen gemeinsamen und keinen eher getrennten Durchtrittsbereich 36 für Sendelicht 16 und Empfangslicht 22 wie in Figur 1. Auch ist statt des gezeigten biaxialen Aufbaus mit Sendepfad neben dem Empfangspfad ein koaxialer Aufbau möglich, bei dem Sendepfad und Empfangspfad zusammenfallen. Andererseits ist auch denkbar, die Trennung von Sendelicht 16 und Empfangslicht 22 noch konsequenter vorzunehmen als in Figur 1, wo es eher Darstellungsungenauigkeiten sind, so dass es dann einen nur weniger überlappenden oder sogar jeweiligen eigenen Durchtrittsbereich für Sendelicht 16 und Empfangslicht 22 gibt. Der Verschmutzungstest wird für den Durchtrittsbereich für das Empfangslicht 22 weniger verlässlich, da nur noch indirekte Aussagen möglich sind beziehungsweise homogene, großflächige Verunreinigungen erkannt werden. In einigen Ausführungsformen gibt es zwei getrennte Frontscheiben für Sendelicht 16 und Empfangslicht 22. In diesem Fall wird die zweite Frontscheibe für das Empfangslicht 22 nicht mit überwacht, und vorzugsweise wird dort ein anderes Konzept zur Überwachung der Verschmutzung umgesetzt.

Figur 2 zeigt den Strahlenverlauf des Sendelichts 16 in einer Querschnittsdarstellung. Der Lichtsender 12 sendet das Sendelicht 16 mit großem Abstrahlwinkel von beispielsweise 80° horizontal und 50° vertikal aus. An der Verunreinigung 38 entsteht beim Austritt aus der Frontscheibe 34 Streulicht, das in die Frontscheibe 34 zurückgestreut wird, wobei außer im Falle ganz ungewöhnlich undurchdringlicher Verunreinigungen weiterhin ein Großteil des Sendelichts 16 in den Erfassungsbereich 18 gelangt. Aufgrund der Streucharakteristik, die beispielsweise als Lambert-Streuung oder Mie-Streuung angenommen werden kann, hat das Streulicht verschiedenste Winkelkomponenten. Ein gewisser Anteil 40 des Streulichts breitet sich in hinreichend flachem Winkel zur Ebene der Frontscheibe 34 aus, um an deren Innenseiten einfach oder mehrfach totalreflektiert zu werden.

Der Auskopplungsbereich 42 in der Frontscheibe 34 sorgt dafür, dass an dieser Stelle die Bedingungen der Totalreflexion nicht mehr erfüllt sind. Dadurch wird das Frontscheibenüberwachungslichtbündel 44 aus der Frontscheibe 34 ausgekoppelt. Zu beachten ist dabei, dass die schwarze Zickzacklinie 48 in Figur 2 nur die Geometrie des Auskopplungsbereichs 42 andeuten soll und keinem Lichtstrahl entspricht. Der zweite Lichtempfänger 46 ist im Lichtweg des Frontscheibenüberwachungslichtbündels angeordnet, vorzugsweise in großer Nähe, um Lichtverluste zu vermeiden.

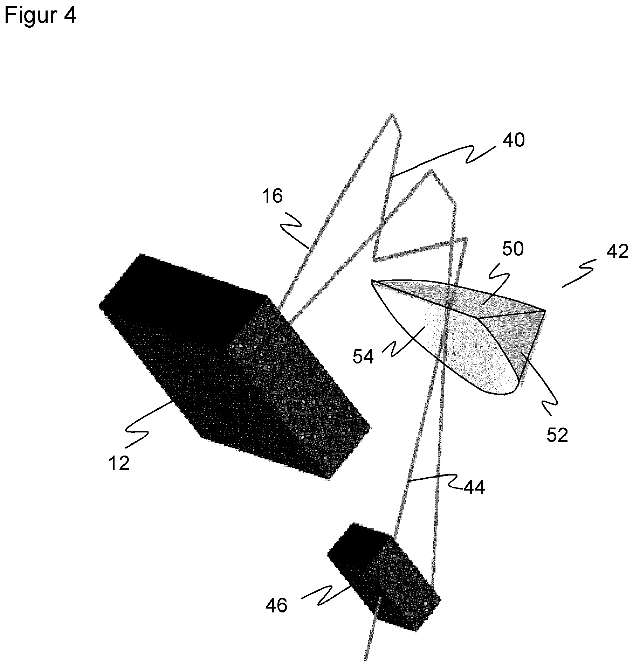

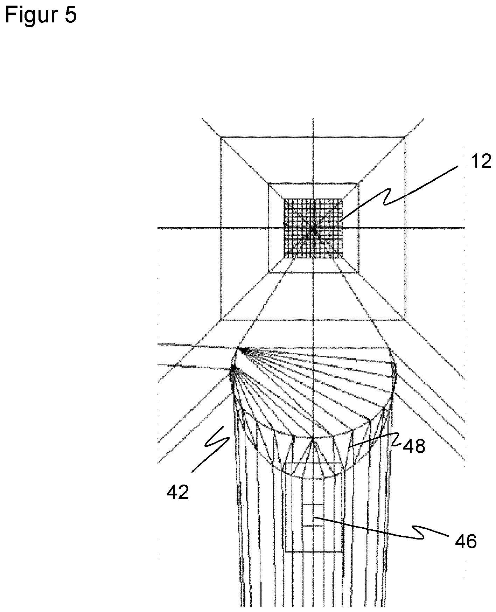

Die Figuren 3 bis 5 illustrieren den Lichtweg des Frontscheibenüberwachungslichtbündels 44 und den Auskopplungsbereich 42 weiter. Dabei ist Figur 3 eine dreidimensionale Darstellung allein des Auskopplungsbereichs 42 in einer bevorzugten Geometrie eines schräg stehenden Zylinderabschnitts. Figur 4 zeigt nochmals dreidimensional den Strahlweg des Anteils des Sendelichts 16, der das Frontscheibenüberwachungslichtbündel 44 bildet, und Figur 5 ist eine entsprechende Frontalansicht.

Wie am besten in Figur 3 zu erkennen, weist der Auskopplungsbereich 42 eine Deckfläche 50 und einen gekrümmten Mantelabschnitts 52 auf. Die Geometrie entspricht vorzugsweise dem schräg abgeschnittenen oberen Teil eines aufrecht stehenden Zylinders. Die Orientierung und Anordnung des Auskopplungsbereichs 42 bezüglich der Frontscheibe 34 lässt sich der Figur 4 im Zusammenhang mit Figur 2 entnehmen, wobei Figur 5 die Anordnung ergänzend ein weiteres Mal aus anderer Perspektive illustriert. Die eigentliche Auskopplungsstelle bildet die schräg in die Frontscheibe 34 hineinstehende Deckfläche 50, die ein Halb- oder Teilkreis ist. Daran schließt sich der Mantelabschnitt 52 des Zylindermantels an. Dann ist der Zylinder durch die Außenfläche der Frontscheibe 34 abgeschnitten, die Unterseite 54 des Auskopplungsbereichs 42 ist bündig mit der Frontscheibe 34. Der Auskopplungsbereich 42 kann als echte Kerbe in Form einer luftgefüllten Aussparung ausgebildet sein, alternativ ist ein Material mit einer anderen optischen Dichte als derjenigen des Materials der Frontscheibe 34 selbst vorstellbar. Auch das wird als Kerbe bezeichnet, da es optisch ebenso wirkt.

Der Auskopplungsbereich 42 hat zwei Funktionen. Zum einen soll damit das Frontscheibenüberwachungslichtbündel 44 ausgekoppelt und zu dem zweiten Lichtempfänger 46 gelenkt werden. Zum zweiten soll aber auch Sendelicht 16, dass an der Innenseite der Frontscheibe 34 gerichtet reflektiert wird, von dem zweiten Lichtempfänger 46 weggelenkt werden, da ein solcher Lichtanteil von einer möglichen Verunreinigung der Frontscheibe 34 nicht verändert würde.

Um die Robustheit der Frontscheibenüberwachung gegenüber Fremdlicht und Reflektoren, vor allem Retroreflektoren, im Hintergrund des Erfassungsbereichs 18 noch weiter zu erhöhen, kann die Außenseite der Frontscheibe 34 auf Höhe des Auskopplungsbereichs 42 beziehungsweise das zweiten Lichtempfängers 46 eine lichtabsorbierende Beschichtung aufweisen.

Die Frontscheibenüberwachung kann auch noch für eine Zusatzfunktion genutzt werden. Das Frontscheibenüberwachungslichtbündel 44 trägt nämlich auch eine Information über die optische Ausgangsleistung des Lichtsenders 12 in sich. Dessen Funktion muss in einem sicheren optoelektronischen Sensor 10 auch überwacht werden (Laser Diode / LED Monitoring). Dies kann durch das Frontscheibenüberwachungslichtbündel 44 beziehungsweise das davon in dem zweiten Lichtempfänger 46 erzeugte Signal erfolgen oder zumindest davon unterstützt und plausibilisiert werden. Damit auch eine saubere Frontscheibe 34 zu diesem Zweck ein Frontscheibenüberwachungslichtbündel 44 erzeugt, ist denkbar, ein lichtstreuendes Element an der Frontscheibe 34 anzubringen, das gleichsam wie eine wohldefinierte Verunreinigung wirkt. Ein solches lichtstreuendes Element erstreckt sich vorzugsweise nur über einen Teil des Durchtrittsbereichs 36, um die Beleuchtung und Lichterfassung nicht unnötig zu beeinträchtigen. Beispielsweise kann es in einem Randbereich angebracht sein, in dem nur Sendelicht 16 austritt, aber kein Empfangslicht 22 eintritt. Alternativ zu einem derart beschriebenen lichtstreuenden Element kann auch einfach auf eine Antireflex-Beschichtung der Frontscheibe 34 verzichtet werden, sodass auch ohne Verschmutzung 38 ein kleiner Teil des Sendelichts 16 in der Frontscheibe 34 totalreflektiert wird.

## Patentansprüche

1. Optoelektronischer Sensor (10), der einen Lichtsender (12) zum Aussenden von Sendelicht (16) in einen Erfassungsbereich (18), einen ersten Lichtempfänger (26) zum Erzeugen eines Empfangssignals aus Empfangslicht (22) aus dem Erfassungsbereich (18), eine Frontscheibe (34) mit einem Durchtrittsbereich (36) für das Sendelicht (16) sowie eine Steuer- und Auswertungseinheit (28) aufweist, die dafür ausgebildet ist, das Empfangssignal auszuwerten und eine beeinträchtigte Lichtdurchlässigkeit der Frontscheibe (34) zu erkennen,
**dadurch gekennzeichnet,**
**dass** die Frontscheibe (34) einen Auskopplungsbereich (42) aufweist, an der ein Frontscheibenüberwachungslichtbündel (44) aus der Frontscheibe (34) in den Sensor (10) zurückkehrt, dass die Steuer- und Auswertungseinheit (28) die Lichtdurchlässigkeit anhand des Frontscheibenüberwachungslichtbündels (44) bewertet, und dass das Frontscheibenüberwachungslichtbündel (44) ein Anteil des Sendelichts (16) ist, der bei Austritt des Sendelichts (16) aus der Frontscheibe (34) zurückgestreut und dann in der Frontscheibe (34) ein- oder mehrfach totalreflektiert wird.

2. Sensor (10) nach Anspruch 1,
der einen zweiten Lichtempfänger (46) zum Empfangen des Frontscheibenüberwachungslichtbündels (44) aufweist.

3. Sensor (10) nach Anspruch 2,
wobei der erste Lichtempfänger (26) zugleich als zweiter Lichtempfänger (46) fungiert, wobei insbesondere mindestens ein Lichtumlenkelement zwischen Auskopplungsstelle (42) und erstem Lichtempfänger (26) angeordnet ist.

4. Sensor (10) nach einem der vorhergehenden Ansprüche,
wobei der Lichtsender (12) einen breiten Abstrahlwinkel in zumindest einer Querschnittsrichtung aufweist.

5. Sensor (10) nach einem der vorhergehenden Ansprüche,
wobei die Frontscheibe (34) als Fläche ausgebildet ist.

6. Sensor (10) nach einem der vorhergehenden Ansprüche,
wobei der Auskopplungsbereich (42) einen Versatz gegenüber dem Durchtrittsbereich (36) aufweist.

7. Sensor (10) nach einem der vorhergehenden Ansprüche,
wobei der Auskopplungsbereich (42) als Kerbe auf einer Innenseite der Frontscheibe (34) ausgebildet ist.

8. Sensor (10) nach einem der vorhergehenden Ansprüche,
wobei der Auskopplungsbereich (42) die Geometrie eines Zylinderabschnitts aufweist.

9. Sensor (10) nach Anspruch 8,
wobei der Zylinderabschnitt einen Teil des Zylindermantels (52) und einen Teil einer Zylindergrundfläche (50) umfasst.

10. Sensor (10) nach Anspruch 8 oder 9,
wobei die Symmetrieachse der zylindrischen Geometrie des Auskopplungsbereichs (42) gegenüber einem Lot von dem Lichtsender (12) auf die Frontscheibe (34) verkippt ist.

11. Sensor (10) nach einem der vorhergehenden Ansprüche,
wobei der Auskopplungsbereich (42) sich von der Innenseite der Frontscheibe (34) her bis mindestens in die Hälfte der Dicke der Frontscheibe (34) zieht.

12. Sensor (10) nach einem der vorhergehenden Ansprüche,
wobei die Frontscheibe (34) ein lichtstreuendes Element aufweist, das insbesondere den Durchtrittsbereich (36) nur teilweise überdeckt.

13. Sensor (10) nach einem der vorhergehenden Ansprüche,
wobei der Sensor (10) als Sicherheitssensor für den sicherheitstechnischen Einsatz zur Unfallvermeidung ausgebildet ist, wobei die Steuer- und Auswertungseinheit (28) dafür ausgebildet ist, bei Erkennen eines Gefahrereignisses ein Signal zum Einleiten einer sicherheitsgerichteten Reaktion auszugeben, wobei das Gefahrereignis ein in einer gefährlichen Situation erfasstes Objekt (20) oder eine über eine Toleranz hinausgehende Beeinträchtigung der Lichtdurchlässigkeit der Frontscheibe (34) ist.

14. Sensor (10) nach einem der vorhergehenden Ansprüche,
wobei der Sensor (10) als Kamera mit einem Bildsensor als Lichtempfänger (26) ausgebildet ist, insbesondere als 3D-Lichtlaufzeitkamera zur Erfassung dreidimensionaler Bilddaten aus dem Erfassungsbereich (18), wobei die Steuer- und Auswertungseinheit (28) dafür ausgebildet ist, das Sendelicht (16) mit mindestens einer Modulationsfrequenz zu modulieren, das jeweilige Empfangssignal von Lichtempfangspixeln (26a) des Bildsensors (26) mit der Modulationsfrequenz zu demodulieren und anhand eines Phasenversatzes einen jeweiligen Abstandswert zu bestimmen.

15. Verfahren zum Erfassen von Informationen aus einem Erfassungsbereich (18), wobei Sendelicht (16) in den Erfassungsbereich (18) ausgesandt, aus Empfangslicht (22) aus dem Erfassungsbereich (18) ein Empfangssignal erzeugt und das Empfangssignal ausgewertet wird, wobei eine beeinträchtigte Lichtdurchlässigkeit einer Frontscheibe (34) mit einem Durchtrittsbereich (36) für das Sendelicht (16) erkannt wird,
**dadurch gekennzeichnet,**
**dass** die Lichtdurchlässigkeit anhand eines Frontscheibenüberwachungslichtbündels (44) bewertet wird, wobei das Frontscheibenüberwachungslichtbündel (44) entsteht, wenn ein Anteil des Sendelichts (16) bei Austritt an der Frontscheibe (34) in den Erfassungsbereich (18) zurückgestreut wird, davon ein Anteil (40) in der Frontscheibe (34) ein- oder mehrfach totalreflektiert wird und davon wiederum ein Anteil an einer Auskopplungsstelle (42) als das Frontscheibenüberwachungslichtbündels (44) aus der dem Erfassungsbereich (18) abgewandten Innenseite der Frontscheibe (34) austritt.
